# NEW EUROPEAN PATENT SPECIFICATION

(11) **EP 0 232 923 B2**
(45) Date of publication and mention of the opposition decision: **08.05.1996**
(45) Mention of the grant of the patent: 08.07.1992
(21) Application number: 87200004.7
(22) Date of filing: 05.01.1987
(51) Int. Cl.: H01M 2/16, C25B 13/08

(54) **Improved ion-permeable diaphragms for electrolytic cells**
Ionendurchlässige Diaphragmen für Elektrolysezellen
Diaphragmes perméables aux ions pour cellules électrolytiques

(30) Priority: 08.01.1986 GB 8600401
(43) Date of publication of application: 19.08.1987
(73) Proprietor: Hydrogen Systems N.V., B-3800 Sint-Truiden (BE)
(72) Inventor: Vandenborre, Jan-Baptist Hugo, Dr., B-2460 Kasterlee (BE)
(74) Representative: Wante, Dirk

(56) References cited:
- BE-A- 874 361
- DE-A- 2 529 153
- FR-A- 2 546 535
- GB-A- 1 197 357
- GB-A- 2 045 804
- US-A- 3 817 772
- US-A- 3 890 417
- US-A- 4 072 793
- US-A- 4 371 596
- PATENT ABSTRACTS OF JAPAN, vol. 6, no. 119 (E-116)[997], 3rd July 1982; & JP-A-57 46 465 (FURUKAWA DENKI KOGYO K.K.) 16-03-1982
- CHEMICAL ABSTRACTS, vol. 83, no. 22, 1st December 1975, page 188, abstract no. 182070s, Columbus, Ohio, US; & JP-A-75 64 739 (TOKYO SHIBAURA ELECTRIC CO., LTD) 02-06-1975
- PATENT ABSTRACTS OF JAPAN, vol. 6, no. 176 (E-130)[1054], 10th September 1982; & JP-A-57 95 071 (FUJIKURA DENSEN K.K.) 12-06-1982
- CHEMICAL ABSTRACTS, vol. 83, no. 8, 25th August 1975, page 120, abstract no. 60886s, Columbus, Ohio, US; & IN-A-109 715 (INDIA MINISTRY OF DEFENCE) 09-11-1968
- Mol Research Division Report, 1985, pp. 122-126 and 139-144

## Description

This invention is concerned with a process for preparing diaphragms for electrolytic cells.

More specifically, the invention is concerned with a process for preparing an ion-permeable diaphragm comprising an organic fabric embedded in a film forming mixture of a particulate inorganic hydrophilic material and an organic polymeric binder, comprising the steps of :
i) mixing the particulate inorganic hydrophilic material with a solution of the polymeric binder in an appropriate solvent to form a slurry;
ii) uniformly spreading said slurry on an inert flat surface to form a wet sheet of a thickness of less than 2 mm;
iii) immersing any type of woven or non-woven organic fabric, said fabric being stetched, into the wet sheet;
iv) removing the solvent by evaporation and/or lixiviation while keeping the fabric stretched during removal of the solvent; and
v) removing the sheet from the said surface.

In comparison with the diaphragms presently in use, the diaphragms made according to the invention show distinct advantages as will be explained in more detail herebelow.

In the literature concerning electrochemical cells a distinction is often made between diaphragms and membranes based on the mechanism by which ions permeate the separation wall. The permeation of diaphragms by ions is meant to be diffusion-controlled while that of membranes is meant to be based on an ion-exchange mechanism. In many cases, however, both mechanisms will be involved. As used throughout the present specification and in the claims, the term "diaphragm" is meant to include both diffusion-controlled and ion-exchange-controlled separation walls for electrochemical cells. Ion-permeable diaphragms have, during the last years, been increasingly used in electrochemical cells. Their function is essentially to separate both electrodes of an electrochemical cell in such a manner that ionic conductivity is kept optimal while intermixture of the, usually gaseous, reaction products formed at the surface of the electrodes is prevented. For example, in the electrolysis of water, hydrogen gas evolves at the cathode and oxygen gas at the anode. Quite evidently, mixing of both gases must be prevented in order to produce them in pure form, and, not in the least, to prevent the formation of a highly explosive gas mixture.

For an effective and safe operation of an electrochemical cell, it is therefore of the utmost importance to have it equipped with a diaphragm which is persistent and inert under the conditions of operation while displaying good ionic conductivity and being virtually impermeable for the gaseous reaction products. In the past, various types of diaphragms have been tried and actually used. Thus far, none of them has been found completely satisfactory, as they all suffer from one or more disadvantages, which are usually inherent to the nature of the materials used and the structure and/or conformation of the diaphragms under consideration. For many years, asbestos diaphragms have been most widely used. One of their most important disadvantages is their capacity to swell, deform, dissolve and eventually prolaps in a hot alkaline aqueous environment.

Hence, substantially greater inter-electrode distances and lower working temperatures than otherwise required will be necessary, resulting in the necessity to apply higher voltages and consequently in an important loss of energy. Moreover, in more recent times, the use of asbestos has come under more and more severe attack because of its proven health-hasards. These are specifically threatening people in regular contact with it, for instance, workers in factories where such products are produced or used.

Consequently, attempts have been made to replace asbestos by more efficient and less hazardous materials. Two types of materials which has been tried extensively - both separately and in various combinations with each other- are inorganic wetting substances on the one hand and organic polymers on the other hand. Often used inorganic wetting agents are, for example, the chemically stable oxides and hydroxides of metals like Zirconium, Titanium, Antimony etc. They are usually completely inert, even under extreme conditions of pH and at high temperatures. They show excellent wetting properties. The problem though is, that the production of porous diaphragms possessing sufficient mechanical resistance starting from these materials is far from easy.

Indeed, diaphragms made e.g. of sintered inorganic material, as described in U.S. Pat. No. 3,490,953 are in general too brittle. Sheets of porous polymer materials on the other hand are more flexible and more resistant to mechanical damage. Unfortunately, until now, their use has not been very succesful, mainly due to the hydrophobic character of the used polymer materials. Even if the pore structure is right, the solvalted ions of the electrolyte are not going to migrate easily through the diaphragm, causing great Ohmic losses over the diaphragm and a drastic decrease in cell performance. In gas evolving electrochemical cells, there is also the problem of gas bubbles adhering to the diaphragm surface, which may result in "hot spots" and deterioration of the diaphragm.

One of the solutions that have been put forward for reducing the hydrophobic nature of the polymer is by grafting hydrophilic chains, which contain ionizable groups, onto the polymer backbone. By doing so, the diaphragms swell in aqueous solutions and become permeable to ions. However, as a function of time, these diaphragms exhibit an increase of ionic resistance, which is mainly due to a continuous loss of ionizable groups. Due to their short lifetime, diaphragms of this type - i.e. homogeneous polymeric diaphragms - have not found wide application. Heterogeneous diaphragms, comprising particulate wetting agents of an organic or inorganic nature, have proven more successfull in this respect. Examples of particulate wetting agents, which have been incorporated in diaphragms for electrolytic cells, include, for example, organic ion exchange resins and inorganic ion exchangers like Zirconium phosphate, Zirconium oxide, Zirconium hydroxide, Antimony oxide, Polyantimonic acid etc.

In order to give better strength to diaphragms of inorganic material, certain techniques have been developed whereby the particulate inorganic material is fixated in the open structures of a woven or non-woven matrix. Descriptions of various diaphragms which comprise inorganic wetting agents in an organic polymeric sheet will be found, for example, in the following references :
British Patent Nos. 1 081 046 and 1 503 915 and European Patent Application No. 96, 991.

Inversely, there have also been described diaphragms consisting of an inorganic cloth which has been reinforced with a precipitate of polymeric material (see e.g. U.S. Pat. No. 4,233,347).

The methods used to give appropriate porosity to polymeric diaphragms include, for example, stretching of pre-formed films, dissolving and washing out particulate fillers from polymer sheets and preparing films by means of a so-called casting technique. According to this technique, a diluted solution of the polymer, if needed mixed with the desired wetting agent, is spread as a thin layer onto a flat surface, e.g. a glass plate, whereupon the solvent is removed by heating and/or extraction with a solvent in which the polymer does not dissolve. A detailed description of this technique will be found e.g. in U.S. Pat. No. 3,463,713.

By combining an appropriate polymer with an appropriate wetting agent and by forming the diaphragms under suitable casting conditions, diaphragms of good quality can be made. One example of such good quality diaphragms consisting of a polysulfone polymer and polyantimonic acid is described in Brit. Pat. No. 1,545,454 and an improved method of producing them will be found in Brit. Pat. No. 2,045,804. Such diaphragms have indeed been found very effective in use.

Nevertheless, they still have a meaningful disadvantage in that they show a strong tendency to lose their flat structure upon being removed from the casting plate.

Apparently, certain tensions are being built up when the sheet is dried, resulting in an uncontrolled and irregular shrinking. For the good functioning of an electrochemical cell, the perfect flatness of the diaphragm is a prerequisite in order to guarantee a uniform contact all over the electrode surface. Insufficient local contact will allow gas accumulation in the available space, resulting in increased electrical resistance, "hot spots", perforation and irreparable damage.

In view of this shortcoming of the above-described casted diaphragms, problems arise during the manufacturing process and afterwards during storage. Eventually, a considerable percentage of the diaphragms does not meet the requirements. A particular disadvantage of the concerned diaphragms is that they cannot be stored in dry form. In theory, it would be possible to render the de-formed sheets flat again under pressure but such has been found to destroy the required porosity of the diaphragms.

By the present invention, there is provided a process for preparing a new type of diaphragms for use in electrolytic cells which is devoid of all of the abovementioned disadvantages. Indeed, the diaphragms made according to the process of the present invention maintain their flat structure, even upon drying. They show an excellent conductivity for ions and keep this property almost unaffected during a long period of operation. They combine flexibility with a high degree of mechanical strength. Manufacture is easy and, in principle, no dedicated materials or equipment are needed.

Essentially, the diaphragms made according to the process of the present invention comprise an organic fabric which is embedded in an ion-permeable material consisting of a mixture of a particulate inorganic hydrophilic material and an organic polymeric binder.

Depending on the circumstances and the specific requirements of the actual application, each of the components may vary in composition and appearance.

As an organic fabric there may in principle be used any type of woven or non-woven organic fabric made of fibrous material which is inert under the conditions of use of the diaphragm (e.g. pH and temperature), made of fibres having a diameter of less than 1 mm and preferably less than 0.5 mm. The size of the interstices of the fabric is in general not critical but should preferably be smaller than 4 mm and more preferably smaller than 1 mm (1 x 1 mm). Polymeric fibre materials which can advantageously be used in the preparation of diaphragms according to the invention include, for example, co-polymers of ethylene and per-halogenated ethylene, e.g. monochlorotrifluoroethylene. One such polymeric fabric is produced by Allied Chem. Corp. and made evailable under the tradename HALAR®. In a preferred embodiment of the invention, the fabric used is of the woven type.

As particulate hydrophilic inorganic materials there may for example be used oxides and hydrous oxides of metals selected from the following groups of the periodic table of the elements : Ill-A, III-B, IV-A, IV-B, V-A, V-B, Vl-B, VII-B, VIII, the Lanthanide series and the Actinide series. Amongst the foregoing, the oxides and hydrous oxides of Zirconium, Antimony, Nickel, Bismuth and Zinc are particularly preferred. Especially preferred wetting agents are Zirconium oxide, Antimony oxide and poly-antimonic acid.

Obviously, mixtures of various oxides and hydroxides may be used where appropriate. The required grain size of the inorganic material may also depend on the circumstances but should preferably be smaller than 5 µm and most preferably smaller than 1 µm.

As an organic binder there may be employed any type of organic material which is stable under the conditions of operation of the diaphragm, and which can be dissolved in and precipitated from a solvent which in turn does not attack the woven support and the inorganic oxide or hydroxide. Examples of binding substances which may be employed successfully include fluorocarbon polymers like polyvinylidene fluoride, polytetrafluoroethylene, polysulfone, polypropylene, polyvinyl chloride, polyvinylbutyral etc. In order to dissolve these polymeric materials, there can be used, for example, organic solvents like dimethylformamide, dimethylacetamide, dimethylsulfoxide, N-methyl-2-pyrrolidone, mono- and diethyl ethers of ethylene glycol, ketones like methyl-ethyl ketone. The choice of an appropriate solvent is a matter of routine trial but, in general, the solubility characteristics of a particular polymer in various solvents will be sufficiently documented to make further experiments in this respect superfluous.

In order to obtain diaphragms which combine adequate mechanical strength with sufficient ion-permeability, the proportion of inorganic material to organic binder must be kept within certain limits. A too low proportion of inorganic hydrophilic material will result in an unacceptably high resistance of the diaphragm. A too high proportion on the other hand will make it too brittle and fragile. Experimentally, it has been determined that, for an appropriate functioning of the diaphragm, its content of inorganic hydrophilic material as specified hereabove, should be at least about 8 % by weight.

To avoid impairing the mechanical strength of the diaphragm, the inorganic hydrophilic material will appropriately be kept below 95 % by weight. Preferred diaphragm materials comprise, for example, from about 60 to about 90 and most preferably from about 75 to about 85 % by weight of inorganic hydrophilic material.

Obviously, the diaphragm made according to the process of the present invention may contain other elements besides those mentioned as essential components, insofar they do not negatively influence the characteristics.

In order to prepare a uniform diaphragm of appropriate thickness and porosity, the thickness of the wet sheet and the concentration of the diaphragm forming mixture in the solvent must be well chosen. In order to allow appropriate spreading, the slurry may not be too viscous and preferably contain no more than 60 % of the film forming mixture.

The thickness of the wet sheet is preferably less than 2 mm, in particular less than 1.5 mm. The flat surface on which the sheet is spread may, in principle, be made of any non-porous inert material from which the sheet can be easily removed afterwards. Glass plates lend themselves particularly well for this purpose but metal or organic polymeric surfaces can be used as well.

The immersion of the woven support into the wet sheet must be carried out with care, particularly in order to avoid the introduction of air bubbles into the sheet. It is therefore important that the fabric is well stretched, e.g. on a frame and the fabric must be kept stretched during the removal of the solvent. During the immersion operation, the fabric should preferably be kept separated from the support, e.g. at a distance of about 200 µm. The solvent may be removed by evaporation and/or lixiviation. Elevated temperatures may be employed to accelerate the evaporation process. Lixiviation may be carried out in any liquid in which the primary solvent dissolves and which does not interfere with the chemical or physical stability of the fabric or the organic binder. Optimal results have been obtained by removing the solvent by mere lixiviation. When the solvent is water soluble, e.g. dimethylformamide, dimethylacetamide, N-methyl-2-pyrrolidone or dimethylsulfoxide, lixiviation is properly carried out by immersing the casted plate in a water bath.

The diaphragms, composed and prepared as described hereinabove have been found very effective for use in electrolytic cells, especially for the alkaline electrolysis of water and in alkaline fuel cells. They preserve their functional properties during a long period of operation under normal circumstances and can be stored for a long time, even in dry form.

The invention is further illustrated by the following examples.

### Example I

A well mixed suspension consisting of 60 wt % N-methyl-2-pyrrolidone, 32 wt % Zirconium oxide and 8 wt % polysulfone UDEL®, manufacturer Union Carbide, was casted on a glass plate to produce a wet sheet with a thickness of 750 µm and a surface area of 0.5 m. Immediately after casting, a woven fabric consisting of a copolymer of ethylene and monochlorotrifluoroethylene (HALAR ®, manufacturer Allied Chemical Corporation; thickness 300 µm), stretched on a frame, was immersed into the wet sheet at a distance of 100 µ from the plate. The plate was transferred into a water bath and allowed to lixivitate at room temperature for 20 minutes. The lixiviated sheet was peeled from the plate and kept under water for another 15 minutes. The thus formed diaphragm had a thickness of about 500 µ. The diaphragm showed excellent flatness and a very good conductivity for ions when used in an electrochemical cell.

### Example II

Ion-permeable diaphragms according to the invention are prepared by repeating the procedure of example I and using respectively the following film forming slurry.

| | |
|---|---|
| a) Antimony oxide | 26 % |
| Polyvinylidene fluoride | 8.7 % |
| Methylethylketone | 63.3 % |
| b) Antimony oxide | 32 % |
| Polysulfone | 8 % |
| N-methyl-2-pyrrolidone | 60 % |

## Claims

1. A process of preparing an ion-permeable diaphragm comprising an organic fabric embedded in a film forming mixture of a particulate inorganic hydrophilic material and an organic polymeric binder, comprising the steps of:
i) mixing the particulate inorganic hydrophilic material with a solution of the polymeric binder in an appropriate solvent to form a slurry;
ii) uniformly spreading said slurry on an inert flat surface to form a wet sheet of a thickness of less than 2 mm;
iii) immersing any type of woven or non-woven organic fabric, said fabric being stretched, into the
wet sheet;
iv) removing the solvent by evaporation and /or lixiviation while keeping the fabric stretched during removal of the solvent; and v) removing the sheet from the said surface.

2. A process according to claim 1 wherein the said solvent is selected from the group consisting of dimethylformamide, dimethylsulfoxide, dimethylacetamide, N-methyl-2-pyrrolidone and methyl-ethylketone.

3. A process according to any one of claims 1 and 2 wherein the solvent is removed by lixiviation.

4. A process according to any of the preceeding claims wherein the thickness of the wet sheet is less than 1.5 mm.

5. A process according to any of the preceeding claims wherein the said particulate inorganic material is an oxide or hydrous oxide of Antimony, Zinc, Zirconium, Titanium or Bismuth.

6. A process according to any of the preceeding claims wherein the said organic fabric is made of fibers having a diameter of less than 1 mm and said organic fabric has interstices of less than 4 mm2.

7. A process according to any of the preceeding claims wherein the said slurry contains at least 8% of the particulate inorganic hydrophilic material.

8. A process according to claim 7 wherein the said slurry contains from 60 to 95% of the said particulate inorganic hydrophilic material having a grain size of less than 5 µm.

9. A process according to any of the preceeding claims wherein the said particulate inorganic hydrophilic material is an oxide or hydrous oxide of Antimony or Zirconium, the said fabric is made of a copolymer of ethylene and monochlorotrifluorethylene and the said organic polymeric binder is a fluorocarbon polymer, a polysulfone, polypropylene, polyvinyl chloride or polyvinylbutyral.

## Revendications

1. Procédé de préparation d'un diaphragme perméable aux ions comprenant un textile organique enrobé dans un mélange formant pellicule d'une matière hydrophile inorganique particulaire et d'un liant polymérique organique, comprenant les étapes de:
i) mélange de la matière hydrophile inorganique particulaire avec une solution du liant polymérique dans un solvant approprié pour former une bouillie;
ii) étalement uniforme de ladite bouillie sur une surface plane inerte pour former une feuille humide d'une épaisseur inférieure à 2 mm:
iii) immersion de n'importe quel type de textile organique tissé ou non tissé, ledit textile étant étiré. dans la feuille humide;
iv) enlèvement du solvant par évaporation et/ou lixiviation en maintenant le textile étiré pendant l'enlèvement du solvant; et
v) enlèvement de la feuille de ladite surface.

2. Procédé selon la revendication 1 dans lequel ledit solvant est choisi dans le groupe constitué par le diméthylformamide, le diméthylsulfoxyde, le diméthylacétamide, la N-méthyl-2-pyrrolidone et la méthyléthylcétone.

3. Procédé selon l'une quelconque des revendications 1 et 2 dans lequel on enlève le solvant par lixiviation.

4. Procédé selon l'une quelconque des revendications précédentes dans lequel l'épaisseur de la feuille humide est inférieure à 1,5 mm.

5. Procédé selon l'une quelconque des revendications précédentes dans lequel ladite matière inorganique particulaire est un oxyde ou oxyde hydraté d'antimoine. de zinc, de zirconium, de titane ou de bismuth.

6. Procédé selon l'une quelconque des revendications précédentes dans lequel ledit textile organique est fait de fibres ayant un diamètre inférieur à 1 mm et ledit textile organique a des interstices inférieurs à 4 mm.

7. Procédé selon l'une quelconque des revendications précédentes dans lequel ladite bouillie contient au moins 8% de la matière hydrophile inorganique particulaire.

8. Procédé selon la revendication 8 dans lequel ladite bouillie contient de 60 à 95% de ladite matière hydrophile inorganique particulaire ayant une granulométrie inférieure à 5 µm.

9. Procédé selon l'une quelconque des revendications précédentes dans lequel ladite matière hydrophile inorganique particulaire est un oxyde ou oxyde hydraté d'antimoine ou de zirconium, ledit textile est fait d'un copolymère d'éthylène et de monochlorotrifluoréthylène et ledit liant polymérique organique est un polymère de fluorocarbone, une polysulfone, le polypropylène, le chlorure de polyvinyle ou le polyvinylbutyral.

## Patentansprüche

1. Verfahren zur Herstellung eines ionenpermeablen Diaphragmas, das ein in eine filmbildende Mischung eines teilchenförmigen anorganischen, hydrophilen Materials und eines organischen, polymeren Bindemittels eingebettetes organisches Gewebe umfaßt, bei dem:
i) das teilchenförmige, anorganische hydrophile Material mit einer Lösung des polymeren Bindemittels in einem geeigneten Lösungsmittel gemischt wird, um eine Aufschlämmung zu bilden;
ii) die Aufschlämmung gleichmäßig auf einer inerten flachen Oberfläche ausgebreitet wird, um eine Naßschicht mit einer Dicke von weniger als 2 mm zu bilden;
iii) irgendeine Art von Webstoff oder Vliesstoff in die Naßschicht eingetaucht wird, wobei der Stoff gedehnt ist,
iv) das Lösungsmittel durch Verdampfung und/oder Auslaugung entfernt wird wobei das Gewebe während der Entfernung des Lösungsmittels gedehnt gehalten werden muß; und
v) die Schicht von der Oberfläche entfernt wird.

2. Verfahren nach Anspruch 1, bei dem das Lösungsmittel ausgewählt ist aus der Gruppe bestehend aus Dimethylformamid, Dimethylsulfoxid, Dimethylacetamid. N-Methyl-2-pyrrolidon und Methylethylketon.

3. Verfahren nach einem der Ansprüche 1 und 2. bei dem das Lösungsmittel durch Auslaugung entfernt wird.

4. Verfahren nach einem der vorhergehenden Ansprüche, bei dem die Dicke der Naßschicht weniger als 1,5 mm beträgt.

5. Verfahren nach einem der vorhergehenden Ansprüche, bei dem das teilchenförmige. anorganische Material ein Oxid oder ein wäßriges Oxid von Antimon. Zink, Zirkonium, Titan oder Bismuth ist.

6. Verfahren nach einem der vorhergehenden Ansprüche, bei dem das organische Gewebe aus Fasern hergestellt ist, die einen Durchmesser von weniger als 1 mm haben, und das organische Gewebe Zwischenräume von weniger als 4 mm besitzt.

7. Verfahren nach einem der vorhergehenden Ansprüche, bei dem die Aufschlämmung mindestens 8% des teilchenförmigen, anorganischen. hydrophilen Matenals enthält.

8. Verfahren nach Anspruch 7, bei dem die Aufschlämmung 60 bis 95% des teilchenförmigen, anorganischen, hydrophilen Materials enthält. das eine Korngröße von weniger als 5 µm hat.

9. Verfahren nach einem der vorhergehenden Ansprüche, bei dem das teilchenförmige, anorganische, hydrophile Material ein Oxid oder ein wäßriges Oxid von Antimon oder Zirkonium ist, das Gewebe aus einem Copolymer von Ethylen und Monochlortrifluorethylen hergestellt ist und das organische. polymere Bindemittel ein Fluorkohlenstoffpolymer, ein Polysulfon, Polypropylen, Polyvinylchlorid oder Polyvinylbutyral ist.
